(19) Europäisches Patentamt
European Patent Office
Office européen des brevets

(11) EP 2 476 718 B1

(12) EUROPEAN PATENT SPECIFICATION

(45) Date of publication and mention
of the grant of the patent:
**10.08.2016 Bulletin 2016/32**

(51) Int Cl.:
***C08G 69/26*** *(2006.01)*    ***C08L 77/06*** *(2006.01)*

(21) Application number: **10815383.4**

(22) Date of filing: **08.09.2010**

(86) International application number:
**PCT/JP2010/065408**

(87) International publication number:
**WO 2011/030788 (17.03.2011 Gazette 2011/11)**

(54) **POLYAMIDE COPOLYMER AND MOLDED PRODUCT**

POLYAMIDCOPOLYMER UND FORMARTIKEL

COPOLYMÈRE DE POLYAMIDE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.09.2009   JP 2009207233**
**08.09.2009   JP 2009207245**

(43) Date of publication of application:
**18.07.2012   Bulletin 2012/29**

(73) Proprietor: **Asahi Kasei Chemicals Corporation**
**Tokyo 101-8101 (JP)**

(72) Inventors:
• **SASAKI, Yukiyoshi**
**Tokyo 101-8101 (JP)**
• **SAKATA, Norio**
**Tokyo 101-8101 (JP)**
• **SAKUMA, Teruaki**
**Tokyo 101-8101 (JP)**
• **OYAMADA, Hiroshi**
**Tokyo 101-8101 (JP)**

(74) Representative: **D Young & Co LLP**
**120 Holborn**
**London EC1N 2DY (GB)**

(56) References cited:
WO-A1-02/48239      WO-A1-2008/149862
JP-A- 11 512 476     JP-A- 2002 097 265
JP-A- 2003 002 966   US-A1- 2004 049 006

**Description**

Technical Field

The present invention relates to a Polyamide copolymer and a molded product.

Background Art

Conventionally, a Polyamide resin has had excellent fabricability, mechanical properties, and chemical resistance. Therefore, such a polyamide resin has been widely used as a material for various parts such as clothing parts, industrial material parts, automobile parts, electric / electronic parts, or industrial parts.

In recent years, the environment in which a polyamide resin is used has become thermally and mechanically severe. Thus, it has been desired to develop a polyamide resin material whose mechanical properties, and particularly, whose rigidity after water absorption and rigidity under high temperature use have been improved, and which has less change in physical properties in its use in various environments.

In order to respond to such demands, as polyamides whose mechanical properties are improved, there have been disclosed: a polyamide containing from 1 to 80 mol % of a 1,4-cyclohexanedicarboxylic acid having a trans isomer / cis isomer ratio of from 50/50 to 97/3 (for example, Patent Document 1); a polyamide consisting of from 1 to 40% of chain units of a 1,4-cyclohexanedicarboxylic acid and an aliphatic diamine (for example, Patent Document 2); and a polyamide comprising from 85 to 100 mol % of a dicarboxylic acid unit that consists of a 1,4-cyclohexanedicarboxylic acid unit and from 60 to 100 mol % of a diamine unit that consists of an aliphatic diamine unit containing from 6 to 18 carbon atoms (for example, Patent Document 3). Moreover, as means for improving rigidity after water absorption, there has been disclosed a polyamide composed of from 30 to 95% by mass of hexamethylene adipamide, from 0 to 40% by mass of hexamethylene terephthalamide, and from 5 to 30% by mass of hexamethylene isophthalamide (for example, Patent Document 4).

Citation List

Patent Literature

     Patent Document 1: WO 2002/048239
     Patent Document 2: WO 1997/011108
     Patent Document 3: Japanese Patent Laid-Open No. 09-012868
     Patent Document 4: Japanese Patent Laid-Open No. 06-032980

Summary of the Invention

Problems to be Solved by the Invention

However, although rigidity has been improved under common use conditions by the techniques disclosed in Patent Documents 1, 2 and 3, the improvement of rigidity after water absorption and rigidity under high temperature use has not yet been sufficient. The polyamides disclosed in the above-mentioned Patent Documents are problematic in that their change in physical properties becomes large in the usage environment. In addition, in the case of the technique disclosed in Patent Document 4, since the improvement of rigidity after water absorption is not sufficient, it is problematic in that its change in physical properties becomes large in the usage environment, as described above.

Hence, as a matter of fact, a polyamide copolymer, which is excellent in terms of rigidity after water absorption and rigidity under high temperature use and which has less change in physical property in various environments, has not yet been discovered by prior art. Moreover, it is difficult to maintain the balance between mechanical strength and rigidity, which are characteristics of polyamide copolymers, and at the same time, to suppress a decrease in rigidity after water absorption and under high temperature use. Accordingly, it has been desired to develop a polyamide copolymer and a molded product thereof having such physical properties.

The present invention has been made under the above-mentioned circumstances. It is a main object of the present invention to provide a polyamide copolymer that is excellent in terms of rigidity after water absorption (water absorption rigidity) and rigidity under high temperature use (thermal rigidity).

Means for Solving the Problems

As a result of intensive studies directed toward achieving the aforementioned object, the present inventors have found that the object can be achieved with the use of a polyamide copolymer comprising a dicarboxylic acid component unit containing an (a) adipic acid unit, a (b) isophthalic acid unit and a (c) 1,4-cyclohexanedicarboxylic acid unit, and a diamine component unit, wherein the relationship between the content (mol) %) of (b) and the content (mol) %) of (c) in a total of 100 mol % of the dicarboxylic acid component unit containing the (a), the (b) and the (c) satisfies following formula (1) as shown below, thereby completing the present invention.

$$(c) > (b) \geq 0.1 \dots (1).$$

Specifically, the present invention is as follows.

[1] A polyamide copolymer comprising a dicarboxylic acid component unit containing an (a) adipic acid unit, a (b) isophthalic acid unit and a (c) 1,4-cyclohexanedicarboxylic acid unit, and a diamine component unit, wherein the relationship between the content (mol %) of (b) and the content (mol) %) of (c) in a total of 100 mol % of the dicarboxylic acid component unit containing the (a), the (b) and the (c) satisfies following formula (1):

$$(c) > (b) \geq 0.1 \dots (1).$$

[2] The polyamide copolymer according to [1] above, wherein a content of the (a) adipic acid unit is from 40 to 80 mol %, the content of the (b) isophthalic acid unit is from 0.1 to 25 mol %, and the content of the (c) 1,4-cyclohexanedicarboxylic acid unit is from 15 to 40 mol %, based on a total of 100 mol % of the dicarboxylic acid component unit containing the (a), the (b) and the (c).
[3] The polyamide copolymer according to [1] or [2] above, wherein the diamine component unit is an aliphatic diamine component unit.
[4] The polyamide copolymer according to any one of [1] to [3] above, wherein the diamine component unit is a hexamethylenediamine unit.
[5] The polyamide copolymer according to [4] above, which comprises
a unit comprising the (a) adipic acid and the hexamethylenediamine,
a unit comprising the (b) isophthalic acid and the hexamethylenediamine, and
a unit comprising the (c) 1,4-cyclohexanedicarboxylic acid and the hexamethylenediamine.
[6] A polyamide resin composition comprising
100 parts by mass of the polyamide copolymer (A) according to any one of [1] to [5] above, and
1 to 300 parts by mass of an inorganic filler (B).
[7] A molded product comprising the polyamide copolymer according to any one of [1] to [5] above or the polyamide resin composition according to [6] above.
[8] An automobile part comprising the polyamide copolymer according to any one of [1] to [5] above or the polyamide resin composition according to [6] above.
[9] An electronic part comprising the polyamide copolymer according to any one of [1] to [5] above or the polyamide resin composition according to [6] above.
[10] A part for home appliance or OA equipment, or a part for portable device, which comprises the polyamide copolymer according to any one of [1] to [5] above or the polyamide resin composition according to [6] above.
[11] A method for producing a polyamide copolymer by copolymerizing a dicarboxylic acid component with a diamine component, wherein
the method comprises a step of copolymerizing a dicarboxylic acid component containing an (a) adipic acid, a (b) isophthalic acid and a (c) 1,4-cyclohexanedicarboxylic acid with a diamine component, so as to obtain a polyamide copolymer wherein, in a total of 100 mol % of the dicarboxylic acid component unit containing a trans isomer (c-1) and a cis isomer (c-2) of the (c) 1,4-cyclodicarboxylic acid, the (a) adipic acid, and the (b) isophthalic acid, the relationship between the content (mol %) of a unit derived from the (b) and the content (mol %) of a unit derived from the (c-1) satisfies following formula (2):

$$(c\text{-}1) > (b) \geq 0.1 \dots (2).$$

[12] The method for producing the polyamide copolymer according to [11] above, wherein the final endpoint temperature of copolymerization is 270°C or higher in the copolymerization of the dicarboxylic acid component containing the (a) adipic acid, the (b) isophthalic acid and the (c) 1,4-cyclohexanedicarboxylic acid with the diamine component.

[13] The method for producing the polyamide copolymer according to [11] or [12] above, wherein the diamine component is an aliphatic diamine component.

[14] The method for producing the polyamide copolymer according to any one of [11] to [13] above, wherein the aliphatic diamine component is hexamethylenediamine.

[15] The method for producing the polyamide copolymer according to any one of [11] to [14] above, wherein the molar ratio ((c-1) / (c-2)) of the trans isomer (c-1) to the cis isomer (c-2) in the (c) 1,4-cyclodicarboxylic acid used as a raw material monomer for the copolymerization is from 50 / 50 to 10 / 90.

Advantageous Effects of the Invention

According to the present invention, a polyamide copolymer that is excellent in terms of rigidity after water absorption (water absorption rigidity) and rigidity under high temperature use (thermal rigidity) can be provided.

Modes for Carrying Out the Invention

Hereinafter, the mode for carrying out the present invention (hereinafter referred to as "the present embodiment") will be described in detail. However, the present invention is not limited to the following embodiment, and it can be various modified within the scope of the gist of the invention.

[Polyamide copolymer]

The polyamide copolymer of the present embodiment is a polyamide copolymer comprising a dicarboxylic acid component unit containing an (a) adipic acid unit, a (b) isophthalic acid unit and a (c) 1,4-cyclohexanedicarboxylic acid unit, and a diamine component unit, wherein the relationship between the content (mol %) of (b) and the content (mol %) of (c) in a total of 100 mol % of the dicarboxylic acid component unit containing the (a), the (b) and the (c) satisfies formula (1) as shown below. Thereby, a polyamide copolymer that is not only excellent in terms of water absorption rigidity and thermal rigidity but is also excellent in terms of molding appearance can be obtained.

$$(c) > (b) \geq 0.1 \ ... \ (1).$$

With regard to the composition ratio of the dicarboxylic acid component unit in the polyamide copolymer, preferably, the content of the (a) adipic acid unit is from 40 to 80 mol %, the content of the (b) isophthalic acid unit is from 0.1 to 25 mol %, and the content of the (c) 1,4-cyclohexanedicarboxylic acid unit is from 15 to 40 mol %, based on a total of 100 mol % of the dicarboxylic acid component unit containing the (a), the (b) and the (c). As a more preferred composition ratio, the content of the (a) adipic acid unit is from 45 to 80 mol %, the content of the (b) isophthalic acid unit is from 1 to 25 mol %, and the content of the (c) 1,4-cyclohexanedicarboxylic acid unit is from 20 to 40 mol %. Further preferably, in the present polyamide copolymer, the relationship between the (b) and the (c) satisfies the above described formula (1). By setting the composition ratio within the above described range and also by satisfying the relationship represented by formula (1), a polyamide copolymer that is further excellent in terms of water absorption rigidity and thermal rigidity can be obtained without impairing molding appearance. The ratios of each composition constituting the polyamide copolymer can be obtained using a nuclear magnetic resonance apparatus (NMR).

The kind of a substance constituting the diamine component unit used in the present embodiment is not particularly limited. Examples of such a substance may include aliphatic diamine, aromatic diamine, and diamine having a substituent branched from a main chain. Of these, aliphatic diamine is preferable.

Examples of the aliphatic diamine may include straight-chain saturated aliphatic diamines containing from 2 to 20 carbon atoms, such as ethylenediamine, propylenediamine, tetramethylenediamine, pentamethylenediamine, heptamethylenediamine, hexamethylenediamine, octamethylenediamine, nonamethylenediamine, decamethylenediamine, undecamethylenediamine, dodecamethylenediamine and tridecamethylenediamine. Of these aliphatic diamines, hexamethylenediamine is preferably used from the viewpoint of rigidity.

Examples of the aromatic diamine may include metaxylylenediamine.

Examples of the diamine having a substituent branched from a main chain may include branched saturated aliphatic diamines containing from 3 to 20 carbon atoms, such as 2-methylpentamethylenediamine (which is also referred to as 2-methyl-1,5-diaminopentane), 2,2,4-trimethylhexamethylenediamine, 2,4,4-trimethylhexamethylenediamine, 2-methyloctamethylenediamine and 2,4-dimethyloctamethylenediamine.

These diamine components may be used singly or in combination of two or more kinds.

For the polyamide copolymer of the present embodiment, aliphatic dicarboxylic acids other than the (a) adipic acid, the (b) isophthalic acid and the (c) 1,4-cyclohexanedicarboxylic acid, alicyclic dicarboxylic acids, aromatic dicarboxylic acids, polycondensable amino acids and lactams can be used as copolymerization components within a range that does not impair the object of the present embodiment.

Examples of the aliphatic dicarboxylic acids other than the (a) adipic acid, the (b) isophthalic acid and the (c) 1,4-cyclohexanedicarboxylic acid may include straight-chain or branched saturated aliphatic dicarboxylic acids containing from 3 to 20 carbon atoms, such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, eicosane diacid, and diglycolic acid.

Examples of the alicyclic dicarboxylic acids may include alicyclic dicarboxylic acids having an alicyclic structure containing from 3 to 10 carbon atoms, and preferably having an alicyclic structure containing from 5 to 10 carbon atoms, such as 1,3-cyclohexanedicarboxylic acid and 1,3-cyclopentanedicarboxylic acid. Such alicyclic dicarboxylic acid may be unsubstituted, or may have a substituent.

Examples of the aromatic dicarboxylic acids may include aromatic dicarboxylic acids containing from 8 to 20 carbon atoms, which are unsubstituted or substituted with various substituents, such as terephthalic acid, naphthalenedicarboxylic acid, 2-chloroterephthalic acid, 2-methylterephthalic acid, 5-methylisophthalic acid, and 5-sodium sulfoisophthalic acid. Examples of such various substituents may include an alkyl group having from 1 to 6 carbon atoms, an aryl group having from 6 to 12 carbon atoms, an arylalkyl group having from 7 to 20 carbon atoms, a halogen group such as a chloro group or a bromo group, an alkylsilyl group having from 3 to 10 carbon atoms, and a sulfonic acid group or salt thereof such as a sodium salt thereof.

Examples of the polycondensable amino acids may include 6-aminocaproic acid, 11-aminoundecanoic acid, 12-aminododecanoic acid, and p-aminomethylbenzoic acid.

Examples of the lactams may include butyllactam, pivalolactam, caprolactam, capryllactam, enantholactam, undecanolactam, and dodecanolactam.

These dicarboxylic acid components, amino acid components, and lactam components may be used singly or in combination of two or more kinds.

The polyamide copolymer of the present embodiment preferably comprises a unit comprising the (a) adipic acid and the hexamethylenediamine, a unit comprising the (b) isophthalic acid and the hexamethylenediamine, and a unit comprising the (c) 1,4-cyclohexanedicarboxylic acid and the hexamethylenediamine. A polyamide copolymer that is further excellent in terms of water absorption rigidity and high temperature rigidity can be obtained by allowing it to comprise the above-mentioned units.

For molecular weight regulation or the improvement of hot water resistance, an end-capping agent can be further added as a raw material of the polyamide copolymer of the present embodiment. For example, when the polyamide copolymer of the present embodiment is polymerized, a known end-capping agent can be further added.

The kind of such an end-capping agent is not particularly limited. Examples of the end-capping agent may include monocarboxylic acids, monoamines, acid anhydrides such as phthalic anhydride, monoisocyanates, monoacid halides, monoesters, and monoalcohols. Of these examples, monocarboxylic acids and monoamines are preferable from the viewpoint of production costs. These end-capping agents may be used singly or in combination of two or more kinds.

The kind of the monocarboxylic acid used as an end-capping agent is not particularly limited, as long as it is reactive with an amino group. Examples of such monocarboxylic acid may include: aliphatic monocarboxylic acids such as acetic acid, propionic acid, butyric acid, valeric acid, caproic acid, caprylic acid, lauric acid, tridecyl acid, myristyl acid, pulmitic acid, stearic acid, pivalic acid and isobutyric acid; alicyclic monocarboxylic acids such as cyclohexane carboxylic acid; and aromatic monocarboxylic acids such as benzoic acid, toluic acid, α-naphthalene carboxylic acid, β-naphthalene carboxylic acid, methylnaphthalene carboxylic acid and phenylacetic acid. These monocarboxylic acids may be used singly or in combination of two or more kinds.

The kind of the monoamine used as an end-capping agent is not particularly limited, as long as it is reactive with a carboxyl group. Examples of such monoamine may include: aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; and aromatic monoamines such as aniline, toluidine, diphenylamine and naphthylamine. These monoamines may be used singly or in combination of two or more kinds.

The method for producing such a polyamide copolymer is not particularly limited. Known methods can be applied. Examples of such a known production method may include: a method which comprises heating an aqueous solution or an aqueous suspension of a mixture of adipic acid, isophthalic acid, 1,4-cyclohexanedicarboxylic acid, hexamethylenediamine and / or other components, and then polymerizing it while maintaining the melt state (hot melt polymerization method); a method which comprises increasing the degree of polymerization while maintaining a solid state at a temperature at or below the melting point of a polyamide copolymer obtained by the hot melt polymerization method (hot melt polymerization / solid phase polymerization method); a method which comprises heating an aqueous solution or an aqueous suspension of a mixture of adipic acid, isophthalic acid, 1,4-cyclohexanedicarboxylic acid, hexamethylenediamine and / or other components, and further re-melting the precipitated prepolymer with an extruder such as a kneader, so as to increase the degree of polymerization (prepolymer / extrusion polymerization method); a method which comprises heating an aqueous solution or an aqueous suspension of a mixture of adipic acid, isophthalic acid, 1,4-cyclohexanedicarboxylic acid, hexamethylenediamine and / or other components, and increasing the degree of polymerization while maintaining the precipitated prepolymer in a solid state at a temperature at or below the melting point of the polyamide (prepolymer / solid phase polymerization method); and a method, which comprises polymerizing a mixture, solid salt, or polycondensation product of adipic acid, isophthalic acid, 1,4-cyclohexanedicarboxylic acid, hexamethylenediamine and / or other components while maintaining a solid state (solid phase polymerization method).

The polymerization mode is not particularly limited. It may be either a batch type or a continuous type. The polymerization apparatus is not particularly limited, either. Examples of the polymerization apparatus that can be used herein may include known apparatuses, such as an autoclave type reactor, a tumbler type reactor, and an extruder type reactor such as a kneader.

Among the above described production methods, the hot melt polymerization method is preferable from the viewpoint of productivity. An example of such a hot melt polymerization method is a batch-type hot melt polymerization method. Polymerization temperature conditions for the batch-type hot melt polymerization method are not particularly limited. From the viewpoint of productivity, the polymerization temperature is preferably 100°C or higher, more preferably 120°C or higher, and further preferably 170°C or higher. For instance, the following hot melt polymerisation method can be carried out. That is, a mixture, solid salt, aqueous solution or the like of adipic acid, isophthalic acid, 1,4-cyclohexanedicarboxylic acid and hexamethylenediamine is stirred at a temperature of from 110 to 200°C, so that it is heated and concentrated while gradually removing water vapor to approximately from 60 to 90%. Subsequently, heating is continued until the internal pressure becomes approximately from 1.5 to 5.0 MPa (gauge pressure). Thereafter, while removing water and / or gaseous component, the pressure is maintained at approximately from 1.5 to 5.0 MPa (gauge pressure). When the internal temperature has reached preferably 250°C or higher, more preferably 260°C or higher, and further preferably 270°C or higher, the water and / or gaseous component are removed, and at the same time, the pressure is gradually reduced, so that polycondensation can be carried out under a normal or reduced pressure.

Furthermore, there can also be applied a solid phase polymerization method, which comprises subjecting a mixture, solid salt, or polycondensation product of adipic acid, an isophthalic acid, 1,4-cyclohexanedicarboxylic acid and hexamethylenediamine to thermal polycondensation at a temperature of a melting point or lower. These methods may be applied in combination, as necessary.

For example, the above described polyamide copolymer comprising a unit comprising the (a) adipic acid and the hexamethylenediamine, a unit comprising the (b) isophthalic acid and the hexamethylenediamine, and a unit comprising the (c) 1,4-cyclohexanedicarboxylic acid and the hexamethylenediamine can be produced by the hot melt polymerization method. The structural units of the polyamide copolymer can be confirmed using a nuclear magnetic resonance apparatus (NMR).

The method for producing the polyamide copolymer of the present embodiment preferably has a step of copolymerizing a dicarboxylic acid component containing (a) adipic acid, (b) isophthalic acid and (c) 1,4-cyclohexanedicarboxylic acid with a diamine component, so as to obtain a polyamide copolymer wherein, in a total of 100 mol % of the dicarboxylic acid component unit containing a trans isomer (c-1) and a cis isomer (c-2) of the (c) 1,4-oyclodicarboxylic acid, the (a) adipic acid, and the (b) isophthalic acid, the relationship between the content (mol %) of a unit derived from the (b) and a content (mol %) of a unit derived from the (c-1) satisfies formula (2) as shown below. By producing a polyamide copolymer which satisfies following formula (2), its water absorption rigidity and high temperature rigidity can be further improved without impairing molding appearance.

$$(c\text{-}1) > (b) \geq 0.1 \ ... \ (2)$$

Further, the final internal temperature is preferably 270°C or higher, more preferably 280°C or higher, and further preferably 290°C or higher, in the copolymerization of the dicarboxylic acid component containing the adipic acid, the isophthalic acid and the 1,4-cyclohexanedicarboxylic acid with the diamine component. Thereby, the content of the trans isomer unit of the 1,4-cyclohexanedicarboxylic acid in the polyamide copolymer can be increased, and a polyamide copolymer that is further excellent in terms of water absorption rigidity and thermal rigidity can be obtained without impairing moulding appearance. When the above described hot melt polymerization method is adopted, for example, it is preferable to carry out polycondensation under a normal or reduced pressure while setting the final internal temperature within the aforementioned temperature range.

In the case of using an extruder type reactor such as a kneader, extrusion conditions are not particularly limited. The degree of reduction in pressure is preferably approximately from 0 to 0.07 MPa. The extrusion temperature is preferably approximately from 1 to 100°C higher than the melting point obtained by differential scanning calorimetry (DSC) according to JIS K7121. The shearing rate is preferably approximately 100 (sec$^{-1}$) or more, and the mean residence time is preferably approximately from 0.1 to 15 minutes. By adopting the above described extrusion conditions, the occurrence of problems such as coloration or the impossibility of obtaining a high-molecular-weight product can be effectively suppressed.

The kind of a catalyst is not particularly limited, as long as it is a known catalyst used in production of polyamides. Examples of such the catalysts may include phosphoric acid, phosphorous acid, hypophosphorous acid, orthophosphorous acid, pyrophosphorous acid, phenylphosphinic acid, phenylphosphonic acid, 2-methoxyphenylphosphonic acid, 2-(2'-pyridyl)ethylphosphonic acid, and metal salts thereof. Examples of metal in the metal salts may include metal salts and ammonium salts of potassium, sodium, magnesium, vanadium, calcium, zinc, cobalt, manganese, tin, tungsten, germanium, titanium and antimony. Moreover, there can also be used phosphoric esters such as ethyl ester, isopropyl ester, butyl ester, hexyl ester, decyl ester, isodecyl ester, octadecyl ester, stearyl ester and phenyl ester.

1,4-Cyclohexanedicarboxylic acid used as a raw material monomer for the polyamide copolymer of the present embodiment may includes geometric isomers, namely, a trans isomer and a cis isomer. Either a trans isomer or a cis isomer may be used as a 1,4-cyclohexanedicarboxylic acid that is used as a raw material monomer. Alternatively, a mixture containing a trans isomer and a cis isomer at various ratios may also be used. Since such 1,4-cyclohexanedicarboxylic acid isomerizes in a fixed ratio at high temperatures, and the cis isomer has a higher water solubility than the trans isomer in an equivalent amount of salt with a diamine, the molar ratio ((c-1) / (c-2)) of a trans isomer (c-1) to a cis isomer (c-2) in the (c) 1,4-cyclohexanedicarboxylic acid used as a raw material monomer is preferably from 50 / 50 to 10 / 90, more preferably from 40 / 60 to 10 / 90, and further preferably from 35/65 to 15/85. By setting the trans isomer / cis isomer ratio within the above described range, a polyamide copolymer that is further excellent in terms of water absorption rigidity and thermal rigidity can be obtained without impairing molding appearance. The trans isomer / cis isomer ratio can be measured using a nuclear magnetic resonance apparatus (NMR).

The molecular weight of the polyamide copolymer of the present embodiment is not particularly limited. From the viewpoint of achieving excellent moldability and mechanical properties, the number average molecular weight (Mn) of the present polyamide copolymer is preferably from 7000 to 100000, more preferably from 7500 to 50000, and further preferably from 10000 to 40000. The number average molecular weight (Mn) can be obtained, for example, by gel permeation chromatography (GPC) using 0.1 mol % sodium trifluoroacetate dissolved in hexafluoroisopropanol (HFIP) as a solvent and using methyl polymethacrylate (PMMA) as a standard sample. When the number average molecular weight (Mn) of the polyamide copolymer is 7000 or greater, a decrease in rigidity tends to be further suppressed. When the Mn of the polyamide copolymer is 100000 or smaller, a decrease in moldability tends to be further suppressed.

The melting point of the polyamide copolymer of the present embodiment is preferably from 210 to 340°C, more preferably from 230 to 330°C, further preferably from 240 to 320°C, and still further preferably from 240 to 300°C. The melting point can be measured according to JIS K7121. More specifically, the melting point can be measured using "DSC-7" manufactured by PERKIN-ELMER Co., Ltd, for example. Specifically, 8 mg of a sample is used, the temperature is increased to 400°C at a temperature rising rate of 20°C / min, and the peak temperature of the obtained melting curve is defined as a melting point. When the melting point is 210°C or higher, a decrease in drug resistance or heat resistance tends to be further suppressed. On the other hand, when the melting point is 340°C or lower, thermal decomposition during molding or the like tends to be further suppressed.

The glass transition temperature of the polyamide copolymer of the present embodiment is preferably 50 to 110°C, more preferably 50 to 100°C, and further preferably 50 to 90°C. The glass transition temperature can be measured according to JIS K7121. More pacifically, the glass transition temperature can be measured using "DSC-7" manufactured by PERKIN-ELMER Co., Ltd, for example. First, a sample is melted on a hot stage (for Example, "EP80" manufactured by Mettler-Toledo International Inc.), and the thus melted sample is quenched in liquid nitrogen to solidify it, so as to create a measurement sample. Using 10 mg of the measurement sample, the temperature is increased within a range from 30 to 300°C at a temperature rising rate of 20°C / min, and the glass transition temperature can be measured. When the glass transition temperature is 50°C or higher, a decrease in heat resistance or drug resistance hardly occurs, and an increase in water-absorbing property can be effectively prevented. On the other hand, when the glass transition temperature is 110°C or lower, a polyamide copolymer having further excellent molding appearance can be obtained.

In the present embodiment, a polyamide resin composition comprising the above described polyamide copolymer (A) and an inorganic filler (B) can be obtained. A polyamide resin composition having excellent rigidity can be obtained by allowing it to comprise such an inorganic filler (B).

[Inorganic filler (B)]

The kind of the inorganic filler (B) used in the present embodiment is not particularly limited. Examples of such an inorganic filler (B) may include glass fiber, carbon fiber, wollastonite, talc, mica, kaolin, barium sulfate, calcium carbonate, apatite, sodium phosphate, fluorite, silicon nitride, potassium titanate, and molybdenum disulfide. Of these, a glass fiber, a carbon fiber, wollastonite, talc, mica, kaolin, boron nitride, potassium titanate and an apatite are preferable, and a glass fiber is more preferable, from the viewpoint of physical properties, safety and economic efficiency.

The kinds of the glass fiber and carbon fiber are not particularly limited. Glass fibers and carbon fibers having any given shapes such as a long fiber type, a short fiber type and an atypical section type (for example, a cocoon type and an ellipse type) can be used.

Among such glass fibers and carbon fibers, from the viewpoint of exhibiting high properties, a number average fiber diameter of the glass fibers is preferably from 3 to 30 $\mu$m, a weight average fiber length thereof is preferably from 100 to 750 $\mu$m, and an aspect ratio (L / D) between the weight average fiber length and the number average fiber diameter is preferably from 10 to 100. In particular, the glass fiber having a number average fiber diameter of from 3 to 30 $\mu$m, a weight average fiber length of from 100 to 750 $\mu$m, and an aspect ratio (L / D) between the weight average fiber length and the number average fiber diameter that is from 10 to 100 is more preferable.

From the viewpoint of exhibiting high properties, a number average fiber diameter of the wollastonite is preferably from 3 to 30 $\mu$m, a weight average fiber length thereof is preferably from 10 to 500 $\mu$m, and the above described aspect ratio (L / D) is preferably from 3 to 100. In particular, wollastonite having a number average fiber diameter of from 3 to 30 $\mu$m, a weight average fiber length of from 10 to 500 $\mu$m, and the above described aspect ratio (L / D) that is from 3 to 100 is more preferable.

From the viewpoint of exhibiting high properties, it is preferable that talc, mica, kaolin, silicon nitride and potassium titanate each have a number average fiber diameter of from 0.1 to 3 $\mu$m.

The number average fiber diameter and weight average fiber diameter of the above described inorganic filler (B) can be measured by microscopy. For example, the number average fiber diameter and weight average fiber diameter can be measured by a method comprising heating a polyamide resin composition containing pellet-state glass fibers at a temperature higher than the decomposition temperature of the polyamide resin composition, then photographing the remaining glass fibers using a microscope, and then measuring the diameters of the glass fibers. Methods for calculating a number average fiber diameter and a weight average fiber diameter from the measurement values obtained by microscopy may include following formulae (3) and (4):

$$\text{Number average fiber diameter} = \text{a total of glass fiber lengths / the number of glass fibers} \ldots (3)$$

$$\text{Weight average fiber diameter} = \text{a sum of squares of glass fiber lengths / a total of glass fiber lengths} \ldots (4).$$

From the viewpoint of the improvement of mechanical strength, the above described inorganic filler (B) is preferably subjected to a surface treatment. The kind of a surface-treating agent is not particularly limited. For example, a coupling agent or a film-forming agent can be used.

The kind of a coupling agent is not particularly limited. Examples of such a coupling agent may include silane-based coupling agents and titanium-based coupling agents.

The kind of the silane-based coupling agent is not particularly limited. Examples of the silane-based coupling agents may include triethoxy silane, vinyltris($\beta$-methoxyethoxy)silane, $\gamma$-methacryloxypropyltrimethoxysilane, $\gamma$-glycidoxypropyltrimethoxysilane, $\beta$-(1,1-epoxycyclohexyl)ethyltrimethoxysilane, N-$\beta$-(aminoethyl)-$\gamma$-aminopropylmethyldimethoxysilane, $\gamma$-aminopropyltriethoxysilane, N-phenyl-$\gamma$-aminopropyltrimethoxysilane, $\gamma$-mercaptopropyltrimethoxysilane, $\gamma$-chloropropyltrimethoxysilane, $\gamma$-aminopropyltrimethoxysilane, $\gamma$-aminopropyl-tris(2-methoxy-ethoxy)silane, N-methyl-$\gamma$-aminopropyltrimethoxysilane, N-vinylbenzyl-$\gamma$-aminopropyltriethoxysilane, triaminopropyltrimethoxysilane, 3-ureidepropyltrimethoxysilane, 3-hydroimidazolepropyltriethoxysilane, hexamethyl disilazane, N,O-(bistrimethylsilyl)amide and N,N-bis(trimethylsilyl)urea. Of these, aminosilanes and epoxysilanes, such as $\gamma$-aminopropyltrimethoxysilane, N-$\beta$-(aminoethyl)-$\gamma$-aminopropyltrimethoxysilane, $\gamma$-glycidoxypropyltrimethoxysilane and $\beta$-(1,1-epoxycyclohexyl)ethyltrimethoxysilane are preferable from the viewpoint of economic efficiency and good handling ability.

The kind of the titanium-based coupling agent is not particularly limited. Examples of the titanium-based coupling agents may include isopropyltriisostearoyl titanate, isopropyltridodecylbenzenesulfonyl titanate, isopropyltris(dioctylpyrophosphate) titanate, tetraisopropylbis(dioctylphosphite) titanate, tetraoctylbis(ditridecylphosphite) titanate, tetra(1,1-diallyloxymethyl-1-butyl)bis(ditridecyl)phosphite titanate, bis(dioctylpyrophosphate)oxyacetate titanate, bis(dioctylpyrophosphate)ethylene titanate, isopropyltrioctanoyl titanate, isopropyldimethacrylisostearoyl titanate, isopropylisostearoyldiacryl titanate, isopropyltri(dioctylphosphate) titanate, isopropyltricumylphenyl titanate, isopropyltri(N-amidoethyl, aminoethyl) titanate, dicumylphenyloxyacetate titanate, and diisostearoylethylene titanate.

The kind of a film-forming agent is not particularly limited. Examples of the film-forming agents may include polymers including urethane-based polymers, acrylic acid-based polymers, copolymers of a maleic anhydride with an unsaturated monomer such as ethylene, styrene, $\alpha$-methylstyrene, butadiene, isoprene, chloroprene, 2,3-dichlorobutadiene, 1,3-pentadiene or cyclooctadiene, epoxy-based polymers, polyester-based polymers, vinyl acetate-based polymers, and polyether-based polymers. Of these, urethane-based polymers, acrylic acid-based polymers, a butadiene-maleic anhydride copolymer, an ethylene-maleic anhydride copolymer, a styrenemaleic anhydride copolymer, and a mixture thereof are preferable from the viewpoint of high economic efficiency and high performance.

The method of carrying out a surface treatment on the inorganic filler (B) using such a coupling agent and a film-forming agent is not particularly limited. A known method can be applied. Examples of the methods may include: a sizing treatment which comprises applying an organic solvent solution or suspension of the above described coupling agent and film-forming agent used as a so-called sizing agent on the surface; dry blending which comprises applying the above described coupling agent and film-forming agent using a Henschel mixer, a super mixer, a ready mixer, a V blender, etc.; a spray method of applying the above described coupling agent and film-forming agent by spraying them; an integral blend method; and a dry concentrate method. Moreover, there is also applied a method involving a combination of these methods (for example, a method comprising applying a coupling agent and a part of a film-forming agent by the sizing treatment, and then spraying the remaining film-forming agent, etc.). Among these methods, the sizing treatment, the dry blending, the spray method, and the method of combining these methods are preferable.

The amount of the inorganic filler (B) mixed based on 100 parts by mass of the polyamide copolymer (A) is not particularly limited. It is preferably from 1 to 300 parts by mass, more preferably from 1 to 200 parts by mass, further preferably from 1 to 180 parts by mass, and still further preferably from 5 to 150 parts by mass. By setting the mixed amount of the inorganic filler (B) within the above described range, a polyamide copolymer having excellent mechanical properties can be obtained, and the tendency of impairing extrusion performance and moldability can be suppressed. These inorganic fillers (B) may be used singly or in combination of two or more kinds.

For the purpose of prevention of thermal degradation and discoloration during heating and the improvement of heat and aging resistance and weather resistance, the polyamide copolymer of the present embodiment may comprise a degradation inhibitor, as necessary, within a range that does not impair the object of the present embodiment. The kind of the degradation inhibitors is not particularly limited. An example thereof is at least one kind selected from the group consisting of copper compounds such as copper acetate and copper iodide, phenol-based stabilizers such as a hindered phenol compound, phosphite-based stabilizers, hindered amine-based stabilizers, triazine-based stabilizers and sulfur-based stabilizers. These degradation inhibitors may be used singly or in combination of two or more kinds.

The polyamide copolymer of the present embodiment may comprise a moldability improver, as necessary, within a range that does not impair the object of the present embodiment. The kind of the moldability improvers is not particularly limited. An example of such a moldability improver is at least one kind selected from the group consisting of higher fatty acids, higher fatty acid metal salts, higher fatty acid esters, and higher fatty acid amides.

Examples of the higher fatty acids may include saturated or unsaturated, straight-chain or branched aliphatic monocarboxylic acids containing from 8 to 40 carbon atoms, such as stearic acid, palmitic acid, behenic acid, erucic acid, oleic acid, lauric acid and montanoic acid. Of these, stearic acid and montanoic acid are preferable.

Higher fatty acid metal salts are metal salts of the above described higher fatty acids. As metallic elements of such metal salts, Group 1, 2 and 3 metallic elements in the periodic table, zinc and aluminum are preferable, and Group 1 and 2 metallic elements such as calcium, sodium, potassium and magnesium, and aluminum are more preferable. Examples of such higher fatty acid metal salts may include calcium stearate, aluminum stearate, zinc stearate, magnesium stearate, calcium montanate, sodium montanate, and calcium palmitate. Of these, metal salts of montanoic acid, metal salts of stearic acid, and the like are preferable from the viewpoint of moldability.

Higher fatty acid esters are esterification products between the above described higher fatty acids and alcohols. Of these, an ester between fatty acid carboxylic acid containing from 8 to 40 carbon atoms and fatty acid alcohol containing from 8 to 40 carbon atoms is preferable from the viewpoint of moldability. Examples of the alcohols may include stearyl alcohol, behenyl alcohol, and lauryl alcohol. Examples of the higher fatty acid esters may include stearyl stearate and behenyl behenate.

A higher fatty acid amide is an amide compound of the above described higher fatty acid. Examples of the higher fatty acid amides may include stearic acid amide, oleic acid amide, erucic acid amide, ethylene bisstearyl amide, ethylene bisoleyl amide, N-stearyl stearyl amide, and N-stearyl erucic acid amide. Of these, from the viewpoint of moldability, stearic acid amide, erucic acid amide, ethylene bisstearyl amide and N-stearyl erucic acid amide are preferable, and ethylene bisstearyl amide and N-stearyl erucic acid amide are more preferable. These higher fatty acids, higher fatty acid metal salts, higher fatty acid esters and higher fatty acid amides may be used singly or in combination of two or more kinds.

The polyamide copolymer of the present embodiment may comprise a coloring agent, as necessary, within a range that does not impair the object of the present embodiment. The kind of the coloring agents is not particularly limited. An example of the coloring agents is at least one kind selected from the group consisting of dyes such as nigrosine, pigments such as titanium oxide and carbon black, metallic particles of aluminum, colored aluminium, nickel, tin, copper, gold, silver, platinum, iron oxide, stainless steel and titanium, and metallic pigments such as Mica pearl pigment, color graphite, color glass fiber and color glass flake.

The polyamide copolymer of the present embodiment may comprise other resins, as necessary, within a range that does not impair the object of the present embodiment. The kinds of such other resins are not particularly limited. Examples of other resins may include a thermoplastic resin and a rubber component.

Examples of such a thermoplastic resin may include: polystyrene-based reins such as atactic polystyrene, isotactic polystyrene, syndiotactic polystyrene, AS resin and ABS resin; polyester-based resins such as polyethylene terephthalate and polybutylene terephthalate; polyether-based resins of other polyamide, polycarbonate, polyphenylene ether, polysulfone, polyether sulfone and the like, such as nylon 6, 66, 612 and 66 / 6I; condensation-based resins such as polyphenylene sulfide and polyoxymethylene; acrylic-based resins such as polyacrylic acid, polyacrylic acid ester and polymethyl methacrylate; polyolefin-based resins such as polyethylene, polypropylene, polybutene and an ethylene-propylene copolymer; halogen-containing vinyl compound-based resins such as polyvinyl chloride and polyvinylidene chloride; phenol resins; and epoxy resins. These thermoplastic resins may be used singly or in combination of two or more kinds.

Examples of the rubber components may include natural rubber, polybutadiene, polyisoprene, polyisobutylene, neoprene, polysulfide rubber, Thiokol rubber, acrylic rubber, urethane rubber, silicon rubber, epichlorohydrin rubber, styrene-butadiene block copolymer (SBR), hydrogenated styrene-butadiene block copolymer (SEB), styrene-butadiene-styrene block copolymer (SBS), hydrogenated styrene-butadiene-styrene block copolymer (SEBS), styrene-isoprene block copolymer (SIR), hydrogenated styrene-isoprene block copolymer (SEP), styrene-isoprene-styrene block copolymer (SIS), hydrogenated styrene-isoprene-styrene block copolymer (SEPS), styrene-butadiene random copolymer, hydrogenated styrene-butadiene random copolymer, styrene-ethylene-propylene random copolymer, styrene-ethylene-butylene random copolymer, ethylene-propylene copolymer (EPR), ethylene-(1-butene) copolymer, ethylene-(1-hexene) copolymer, an ethylene-(1-octene) copolymer, ethylene-propylenediene copolymer (EPDM), and core-shell-type rubbers such as siloxane-containing core-shell rubbers including, as typical examples, butadiene-acrylonitrile-styrene-core-shell rubber (ABS), methyl methacrylate-butadiene-styrene-core-shell rubber (MBS), methyl methacrylate-butyl acrylate-styrene-core-shell rubber (MAS), octyl acrylate-butadiene-styrene-core-shell rubber (MABS), alkyl acrylate-butadiene-acrylonitrile-styrene-core-shell rubber (AABS), butadiene- styrene-core-shell rubber (SBR) and methyl methacrylate-butyl acrylate siloxane. These rubber components may be used singly or in combination of two or more kinds.

The method of mixing an inorganic filler, a degradation inhibitor, a moldability improver, a coloring agent, other resins and the like into the polyamide copolymer of the present embodiment is not particularly limited. These agents may be mixed into the present polyamide copolymer according to a known extrusion technique. During the mixing operation, a mixing method, a kneading and blending method, and a kneading and blending order are not particularly limited. The aforementioned agents may be mixed into the present polyamide copolymer using a commonly used mixer such as a Henschel mixer, a tumbler and a ribbon blender. As kneading machines, uniaxial or multiaxial extruders are generally used. Among others, from the viewpoint of productivity, a biaxial extruder comprising a decompressor is preferable.

In the present embodiment, a molded product comprising the above described polyamide copolymer or polyamide resin composition can be produced. The method of molding the polyamide copolymer of the present embodiment is not particularly limited, as long as it is a method capable of obtaining a molded product from the polyamide copolymer or polyamide resin composition of the present embodiment. A known molding method can be applied. Examples of such a known molding method may include extrusion, injection molding, vacuum forming, blow molding, injection compression molding, decorative molding, different material molding, gas-assisted injection molding, foam injection molding, low pressure molding, ultrathin injection molding (ultra-high-speed injection molding), and in-mold composite molding (insert molding and outsert molding). By applying these molding methods, a molded product comprising the polyamide copolymer of the present embodiment can be obtained.

Since a molded product comprising the polyamide copolymer or polyamide resin composition of the present embodiment is excellent in terms of water absorption rigidity and thermal rigidity without impairing molding appearance, it can be used for various purposes. The intended use of the molded product is not particularly limited. The molded product can be preferably used, for example, in automobile parts, electric parts, electronic parts, parts for portable devices, mechanical and industrial parts, office equipment parts, and aerospace parts.

Examples of the automobile parts may include parts for automobile interior parts / exterior body panels / automobile exterior parts, parts in automobile engine room, and automobile electric parts. Examples of the electric / electronic parts may include a connector, a switch, a relay, a printed wiring board, an electronic part housing, a plug socket, a noise filter, a coil bobbin, and a motor end cap. Examples of the portable device parts may include packages and structures, such as a mobile phone, a smart phone, a personal computer, a portable game machine, and a digital camera. Moreover, the molded product of the present embodiment has excellent surface appearance, it is preferably used also as a molded product, the surface of which has been coated with a film. The method of forming such a coated film is not particularly limited, as long as it is a known method. Examples of the film-forming methods may include a spray method and an electrostatic coating method. Furthermore, the kind of a paint used in the aforementioned film formation is not particularly limited, as long as it is known. A melamine crosslinking type polyester polyol resin paint, an acrylic urethane paint, and the like can be used.

Examples

Hereinafter, the present embodiment will be more specifically described in the following examples. However, these examples are not intended to limit the present embodiment. It is to be noted that measurement methods applied in the following Examples and Comparative Examples are as follows.

[Measurement methods]

[Number average molecular weight (Mn) of polyamide]

The number average molecular weight of a polyamide or a molded product thereof was obtained by gel permeation chromatography (GPC). As an apparatus, "HLC-8020" manufactured by Tosoh Corporation was used, and as a detector, a differential refractometer (RI) was used. As a solvent, 0.1 mol % sodium trifluoroacetate dissolved in hexafluoroisopropanol (HFIP) was used. As columns, two columns "TSKgel-GMHHR-H" and one column "G1000HHR" manufactured by Tosoh Corporation were used. The flow rate of the solvent was 0.6 mL / min. The sample concentration was from 1 to 3 (mg of sample) / 1 (mL of solvent). The sample was filtrated with a filter, and insoluble matters were then removed, so as to prepare a measurement sample. Based on the obtained elution curve, a number average molecular weight (Mn) was calculated relative to methyl polymethacrylate (PMMA).

[Ratio of trans isomer of 1,4-cyclohexanedicarboxylic acid in polyamide copolymer, and structural units in polyamide copolymer]

The ratio of the trans isomer of 1,4-cyclohexanedicarboxylic acid in a polyamide copolymer was obtained by dissolving from 30 to 40 mg of the polyamide copolymer in 1.2 g of hexafluoroisopropanol deuteride and then measuring it by $^1$H-NMR. As a measurement apparatus, "JNM ECA-500" manufactured by JEOL Ltd. was used. In the case of 1,4-cyclohexanedicarboxylic acid, the trans isomer ratio (trans isomer / cis isomer) was obtained based on the ratio of a peak area derived from a trans isomer to a peak area derived from a cis isomer. Moreover, the ratio of structural units in the polyamide copolymer was obtained by performing $^1$H-NMR measurement and then obtaining it based on the ratio of peak areas derived from each component.

[Melting point (°C)]

A melting point was measured according to JIS K7121, using "DSC-7" manufactured by PERKIN-ELMER Co., Ltd. With regard to measurement conditions, the temperature of approximately 10 mg of a sample was increased at a temperature rising rate of 20°C / min in a nitrogen atmosphere. The temperature of an endothermic peak (melting peak) appearing during the aforementioned temperature rise was defined as Tm1 (°C). The temperature of the sample was kept at (Tm1 + 40)°C for 2 minutes in a melt state. Thereafter, the temperature was decreased to 30°C at a temperature decreasing rate of 20°C / min, and it was then kept for 2 minutes. Thereafter, the temperature was increased at a temperature rising rate of 20°C / min. The peak temperature of an endothermic peak (melting peak) appearing at that time was defined as a melting point (Tm2 (°C)).

[Glass transition temperature (°C)]

A glass transition temperature was measured according to JIS K7121, using "DSC-7" manufactured by PERKIN-ELMER Co., Ltd. Firstly, a sample was melted on a hot stage ("EP80" manufactured by Mettler-Toledo International Inc.), and the sample that was in a melt state was then quenched in liquid nitrogen to solidify it, so as to prepare a measurement sample. Thereafter, the temperature of 10 mg of the measurement sample was increased to a temperature range from 30 to 300°C at a temperature rising rate of 20°C / min, and the glass transition temperature thereof was then measured.

[Production of molded product for use in evaluation of mechanical properties]

A molded product was produced using an injection molding machine. As such an injection molding machine, "PS40E" manufactured by Nissei Plastic Industrial Co., Ltd. was used. A mold temperature was set at 100°C, and a test piece having a thickness of 4 mm was obtained under injection molding conditions of injection for 17 seconds and cooling for 20 seconds. It is to be noted that a cylinder temperature was set at a temperature approximately 30°C higher than the melting point of a polyamide copolymer obtained according to the above described melting point measurement method.

[Measurement of flexural modulus]

An ISO dumbbell having a thickness of 4 mm was produced, and it was defined as a test piece. Using the obtained test piece, a flexural modulus was measured according to ISO178.

[Measurement of flexural modulus after water absorption]

The above described ISO dumbbell was used as a test piece, and it was immersed in hot water of 80°C for 24 hours. Thereafter, a flexural modulus was measured according to ISO178. A wet retention rate was obtained using following formula.

$$\text{Wet retention rate (\%)} = \text{flexural modulus after water absorption (Wet)} / \text{flexural modulus before water absorption (Dry)} \times 100$$

[Measurement of 100°C flexural modulus]

The above described test piece having a thickness of 4 mm was used, and a flexural modulus was measured according to ISO178 in a 100°C atmosphere. A 100°C retention rate was obtained using following formula.

$$\text{100°C retention rate (\%)} = \text{flexural modulus at 100°C} / \text{flexural modulus before water absorption (Dry)} \times 100$$

[Production of molded product for use in evaluation of molding appearance]

A molded product was produced using an injection molding machine. As such an injection molding machine, "IS150E" manufactured by Toshiba Machine Co., Ltd. was used. A mold temperature was set at 90°C, and a test piece having a size of 130 mm long x 130 mm wide x 4 mm thick was obtained under injection molding conditions of injection for 12 seconds and cooling for 20 seconds. It is to be noted that a cylinder temperature was set at a temperature approximately 30°C higher than the melting point of a polyamide copolymer obtained according to the above described melting point measurement method.

[Evaluation of molding appearance]

Using a hand-held gloss checker "IG320" manufactured by Horiba Ltd., the 60°C reflected gloss value of the above described molded product for use in evaluation of molding appearance was measured.

[Measurement of b value]

The b value of the pellet of the polyamide copolymer (A) was measured by a reflection method using a colorimeter "ZE-2000" manufactured by Nippon Denshoku Industries Co., Ltd.
The following compounds were used in production of the polyamide copolymers of the present examples.

(1) Adipic acid, manufactured by Wako Pure Industries Ltd.; trade name: Adipic Acid

(2) 1,4-Cyclohexanedicarboxylic acid, manufactured by Eastman Chemical; trade name: 1,4-CHDA, HP Grade (trans isomer / cis isomer (molar ratio) = 25 / 75)
(3) Isophthalic acid, manufactured by Wako Pure Industries Ltd.; trade name: Isophthalic Acid
(4) Hexamethylenediamine, manufactured by Wako Pure Industries Ltd.; trade name: Hexamethylenediamine

[Polyamide copolymer (A)]

[Example 1] Production of polyamide copolymer (a1)

517.0 g (3.54 mol) of adipic acid, 55.1 g (0.33 mol) of isophthalic acid, 285.5 g (1.66 mol) of 1,4-cyclohexanedicarboxylic acid in which the molar ratio of trans isomer / cis isomer is 25 / 75, and 642.3 g (5.53 mol) of hexamethylenediamine were dissolved in 1500 g of distilled water, so as to prepare an equimolar 50 mass % uniform aqueous solution of the raw material monomers. This aqueous solution was charged into an autoclave having an internal volume of 5.4 L, and the autoclave was then subjected to nitrogen substitution. Thereafter, while the aqueous solution was stirred at a temperature of from 110 to 150°C, water vapor was gradually removed to concentrate the solution to a concentration of 70 mass %. Thereafter, the internal temperature was increased to 218°C. At the same time, the pressure in the autoclave was increased to 1.8 MPa. Then, while water vapor was gradually removed to maintain the pressure at 1.8 MPa, the reaction was carried out for 1 hour until the interval temperature became 270°C. Subsequently, the pressure was decreased to 1 MPa over 1 hour, and polymerization was further carried out for 15 minutes, while supplying nitrogen into the autoclave, so as to obtain a polyamide copolymer. At this time, the final internal temperature of polymerization was 290°C. The obtained polyamide copolymer was crushed to a size of 2 mm or less, and it was then dried at 100°C in a nitrogen atmosphere for 12 hours. The ratio of the trans isomer of a 1,4-cyclodicarboxylic acid component contained in the obtained polyamide copolymer was found to be 69.8 mol %. The composition of the obtained polyamide copolymer (a1) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a1) were evaluated by the above described methods. The evaluation results were shown in Table 2.

[Example 2] Production of polyamide copolymer (a2)

A polyamide copolymer was polymerized by the method described in Example 1 with the exception that 440.9 g (3.02 mol) of adipic acid, 91.1 g (0.55 mol) of isophthalic acid, 330.6 g (1.92 mol) of 1,4-cyclohexanedicarboxylic acid in which the molar ratio of trans isomer / cis isomer is 25 / 75, and 637.4 g (5.49 mol) of hexamethylenediamine were used. At this time, the final internal temperature of polymerization was 291°C. The ratio of the trans isomer of a 1,4-cyclodicarboxylic acid component contained in the obtained polyamide copolymer was found to be 71.4 mol %. The composition of the obtained polyamide copolymer (a2) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a2) were evaluated by the above described methods. The evaluation results were shown in Table 2.

[Example 3] Production of polyamide copolymer (a3)

A polyamide copolymer was polymerized by the method described in Example 1 with the exception that 509.4 g (3.49 mol) of adipic acid, 128.7 g (0.77 mol) of isophthalic acid, 219.1 g (1.27 mol) of 1,4-cyclohexanedicarboxylic acid in which the molar ratio of trans isomer / cis isomer is 25 / 75, and 642.9 g (5.53 mol) of hexamethylenediamine were used. At this time, the final internal temperature of polymerization was 292°C. The ratio of the trans isomer of a 1,4-cyclodicarboxylic acid component contained in the obtained polyamide copolymer was found to be 71.8 mol %. The composition of the obtained polyamide copolymer (a3) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a3) were evaluated by the above described methods. The evaluation results were shown in Table 2.

[Example 4] Production of polyamide copolymer (a4)

A polyamide copolymer was polymerized by the method described in Example 1 with the exception that 433.3 g (2.97 mol) of adipic acid, 173.3 g (1.04 mol) of isophthalic acid, 255.3 g (1.48 mol) of 1,4-cyclohexanedicarboxylic acid in which the molar ratio of trans isomer / cis isomer is 25 / 75, and 638.1 g (5.49 mol) of hexamethylenediamine were used. At this time, the final internal temperature of polymerization was 293°C. The ratio of the trans isomer of a 1,4-cyclodicarboxylic acid component contained in the obtained polyamide copolymer was found to be 72.0 mol %. The composition of the obtained polyamide copolymer (a4) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a4) were evaluated by the above described methods. The evaluation results were shown in Table 2.

[Example 5] Production of polyamide copolymer (a5)

A polyamide copolymer was polymerized by the method described in Example 1 with the exception that 595.3 g (4.07 mol) of adipic acid, 83.4 g (0.50 mol) of isophthalic acid, 172.9 g (1.00 mol) of 1,4-cyclohexanedicarboxylic acid in which the molar ratio of trans isomer / cis isomer is 25 / 75, and 648.4 g (5.58 mol) of hexamethylenediamine were used. At this time, the final internal temperature of polymerization was 290°C. The ratio of the trans isomer of a 1,4-cyclodicarboxylic acid component contained in the obtained polyamide copolymer was found to be 72.2 mol %. The composition of the obtained polyamide copolymer (a5) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a5) were evaluated by the above described methods. The evaluation results were shown in Table 2.

[Example 6] Production of polyamide copolymer (a6)

A polyamide copolymer was polymerized by the method described in Example 1 with the exception that 333.5 g (2.28 mol) of adipic acid, 207.6 g (1.25 mol) of isophthalic acid, 327.5 g (1.90 mol) of 1,4-cyclohexanedicarboxylic acid in which the molar ratio of trans isomer / cis isomer is 25 / 75, and 631.4 g (5.43 mol) of hexamethylenediamine were used. At this time, the final internal temperature of polymerization was 290°C. The ratio of the trans isomer of a 1,4-cyclodicarboxylic acid component contained in the obtained polyamide copolymer was found to be 70.2 mol %. The composition of the obtained polyamide copolymer (a6) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a6) were evaluated by the above described methods. The evaluation results were shown in Table 2.

[Example 7] Production of polyamide copolymer (a7)

A polyamide copolymer was polymerized by the method described in Example 1 with the exception that 332.9 g (2.28 mol) of adipic acid, 135.2 g (0.81 mol) of isophthalic acid, 401.6 g (2.33 mol) of 1,4-cyclohexanedicarboxylic acid in which the molar ratio of trans isomer / cis isomer is 25 / 75, and 630.3 g (5.42 mol) of hexamethylenediamine were used. At this time, the final internal temperature of polymerization was 292°C. The ratio of the trans isomer of a 1,4-cyclodicarboxylic acid component contained in the obtained polyamide copolymer was found to be 72.1 mol %. The composition of the obtained polyamide copolymer (a7) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a7) were evaluated by the above described methods. The evacuation results were shown in Table 2.

[Example 8] Production of polyamide copolymer (a8)

A polyamide copolymer was polymerized by the method described in Example 1 with the exception that 268.1 g (1.83 mol) of adipic acid, 233.1 g (1.40 mol) of isophthalic acid, 371.7 g (2.16 mol) of 1,4-cyclohexanedicarboxylic acid in which the molar ratio of trans isomer / cis isomer is 25 / 75, and 627.1 g (5.40 mol) of hexamethylenediamine were used. At this time, the final internal temperature of polymerization was 291°C. The ratio of the trans isomer of a 1,4-cyclodicarboxylic acid component contained in the obtained polyamide copolymer was found to be 72.3 mol %. The composition of the obtained polyamide copolymer (a8) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a8) were evaluated by the above described methods. The evaluation results were shown in Table 2.

[Comparative Example 1] Polyamide copolymer (a9)

692.2 g (4.74 mol) of adipic acid, 74.9 g (0.45 mol) of isophthalic acid, 77.7 g (0.45 mol) of 1,4-cyclohexanedicarboxylic acid in which the molar ratio of trans isomer / cis isomer is 80 / 20, and 655.2 g (5.64 mol) of hexamethylenediamine were dissolved in 1500 g of distilled water, so as to prepare an equimolar 50 mass % uniform aqueous solution of the raw material monomers. This aqueous solution was charged into an autoclave having an internal volume of 5.4 L, and the autoclave was then subjected to nitrogen substitution. Thereafter, while the aqueous solution was stirred at a temperature of from 110 to 150°C, water vapor was gradually removed to concentrate the solution to a concentration of 70 mass %. Thereafter, the internal temperature was increased to 218°C. At the same time, the pressure in the autoclave was increased to 1.8 MPa. Then, while water vapor was gradually removed to maintain the pressure at 1.8 MPa, the reaction was carried out for 1 hour until the internal temperature became 253°C. Subsequently, the pressure was decreased to 1 MPa over 1 hour, and polymerization was further carried out for 15 minutes while supplying nitrogen into the autoclave, so as to obtain a polyamide copolymer. The obtained polyamide copolymer was crushed to a size of 2 mm or less, and it was then dried at 100°C in a nitrogen atmosphere for 12 hours. The composition of the obtained polyamide copolymer (a9) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a9) were evaluated by the above described methods. The evaluation results were shown in Table 2.

[Comparative Example 2] Polyamide copolymer (a10)

A polyamide copolymer was polymerized by the method described in Comparative Example 1 with the exception that 595.9 g (4.08 mol) of adipic acid, 129.9 g (0.78 mol) of isophthalic acid, 125.0 g (0.73 mol) of 1,4-cyclohexanedicarboxylic acid in which the molar ratio of trans isomer / cis isomer is 30 / 20, and 649.1 g (5.59 mol) of hexamethylenediamine were used. The composition of the obtained polyamide copolymer (a10) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a10) were evaluated by the above described methods. The evaluation results were shown in Table 2.

[Comparative Example 3] Polyamide copolymer (a11)

A polyamide copolymer was polymerized by the method described in Comparative Example 1 with the exception that 317.5 g (2.17 mol) of adipic acid, 270.7 g (1.63 mol) of isophthalic acid, 280.6 g (1.63 mol) of 1,4-cyclohexanedicarboxylic acid in which the molar ratio of trans isomer / cis isomer is 30 / 20, and 631.2 g (5.43 mol) of hexamethylenediamine were used. The composition of the obtained polyamide copolymer (a11) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a11) were evaluated by the above described methods. The evaluation results were shown in Table 2.

[Comparative Example 4] Polyamide copolymer (a12)

A polyamide copolymer was polymerized by the method described in Comparative Example 1 with the exception that 509.9 g (3.49 mol) of adipic acid, 174.8 g (1.05 mol) of isophthalic acid, 171.7 g (1.00 mol) of 1,4-cyclohexanedicarboxylic acid in which the molar ratio of trans isomer / cis isomer is 30 / 20, and 643.6 g (5.54 mol) of hexamethylenediamine were used. The composition of the obtained polyamide copolymer (a12) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a12) were evaluated by the above described methods. The evaluation results were shown in Table 2.

[Example 9] Polyamide copolymer (a13)

509.4 g (3.49 mol) of adipic acid, 128.7 g (0.77 mol) of isophthalic acid, 219.1 g (1.27 mol) of 1,4-cyclohexanedicarboxylic acid in which the molar ratio of trans isomer / cis isomer is 25 / 75, and 642.9 g (5.53 mol) of hexamethylenediamine were dissolved in 1500 g of distilled water, so as to prepare an equimolar 50 mass % uniform aqueous solution of the raw material monomers. This aqueous solution was charged into an autoclave having an internal volume of 5.4 L, and the autoclave was then subjected to nitrogen substitution. Thereafter, while the aqueous solution was stirred at a temperature of from 110 to 150°C, water vapor was gradually removed to concentrate the solution to a concentration of 70 mass %. Thereafter, the internal temperature was increased to 218°C. At the same time, the pressure in the autoclave was increased to 1.8 MPa. Then, while water vapor was gradually removed to maintain the pressure at 1.8 MPa, the reaction was carried out for 1 hour until the internal temperature became 253°C. Subsequently, the pressure was decreased to 1 MPa over 1 hour, and polymerization was further carried out for 15 minutes while supplying nitrogen into the autoclave, so as to obtain a polyamide copolymer. At this time, the final internal temperature of polymerization was 275°C. The obtained polyamide copolymer was crushed to a size of 2 mm or less, and it was then dried at 100°C in a nitrogen atmosphere for 12 hours. The ratio of the trans isomer of a 1,4-cyclodicarboxylic acid component contained in the obtained polyamide copolymer was found to be 56.7 mol %. The composition of the obtained polyamide copolymer (a13) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a13) were evaluated by the above described methods. The evaluation results were shown in Table 2.

[Example 10] Polyamide copolymer (a14)

433.3 g (2.97 mol) of adipic acid, 173.3 g (1.04 mol) of isophthalic acid, 255.3 g (1.48 mol) of 1,4-cyclohexanedicarboxylic acid in which the molar ratio of trans isomer / cis isomer is 25 / 75, and 633.1 g (5.49 mol) of hexamethylenediamine were dissolved in 1500 g of distilled water, so as to prepare an equimolar 50 mass % uniform aqueous solution of the raw material monomers. This aqueous solution was charged into an autoclave having an internal volume of 5.4 L, and the autoclave was then subjected to nitrogen substitution. Thereafter, while the aqueous solution was stirred at a temperature of from 110 to 150°C, water vapor was gradually removed to concentrate the solution to a concentration of 70 mass %. Thereafter, the internal temperature was increased to 218°C. At the same time, the pressure in the autoclave was increased to 1.8 MPa. Then, while water vapor was gradually removed to maintain the pressure at 1.8 MPa, the reaction was carried out for 1 hour until the internal temperature became 253°C. Subsequently, the pressure was decreased to 1 MPa over 1 hour, and polymerization was further carried out for 15 minutes while supplying nitrogen into the autoclave, so as to obtain a polyamide copolymer. At this time, the final internal temperature of polymerization was 275°C. The obtained polyamide copolymer was crushed to a size of 2 mm or less, and it was then dried at 100°C in a nitrogen atmosphere for 12 hours. The ratio of the trans isomer of a 1,4-cyclodicarboxylic acid component contained in the obtained polyamide copolymer was found to be 58.1 mol %. The composition of the obtained polyamide copolymer (a14) is shown in Table 1. The ratio of the structural units of the polyamide copolymer shown in Table 1 was obtained by analyzing the obtained copolymer by $^1$H-NMR. The water absorption rigidity, thermal rigidity, and molding appearance of the obtained polyamide copolymer (a14) were evaluated by the above described methods. The evaluation results were shown in Table 2.

[Inorganic filler (B)]

Glass fibers (b1): manufactured by Chongqiung Polycomp International Corporation; trade name: ECS301HP; average fiber diameter: 10 $\mu$m; cut length: 3 mm

<Example 11>

100 parts by mass of the polyamide copolymer (a1) was supplied from a feed hopper to a 35 mm biaxial extruder, TEM, manufactured by Toshiba Machine Co., Ltd. (set temperature: a temperature approximately 30°C higher than the melting point of the polyamide copolymer which had been determined according to the above described melting point measurement method; screw rotation speed: 300 rpm). In addition, from a side feed port, the glass fibers (b1) were supplied at a ratio of 100 parts by mass of the glass fibers (b1) based on 100 parts by mass of the polyamide copolymer (A), and thereafter, a melted kneaded product extruded from a spinning port was cooled in a strand state. The resultant was pelletized to obtain a polyamide resin composition in the form of a pellet. The water absorption rigidity, thermal rigidity, and molding appearance of the obtained polyamide resin composition were evaluated by the above described methods. The evaluation results were shown in Table 3.

<Example 12>

A polyamide resin composition was obtained by the same method as that described in Example 11 with the exception that the polyamide copolymer (a2) was used. Water absorption rigidity and thermal rigidity were evaluated by the above described methods. The evaluation results were shown in Table 3.

<Example 13>

A polyamide resin composition was obtained by the same method as that described in Example 11 with the exception that the polyamide copolymer (a3) was used. Water absorption rigidity and thermal rigidity were evaluated by the above described methods. The evacuation results were shown in Table 3.

<Example 14>

100 parts by mass of the polyamide copolymer (a3) was supplied from a feed hopper to a 35 mm biaxial extruder, TEM, manufactured by Toshiba Machine Co., Ltd. (set temperature: a temperature approximately 30°C higher than the melting point of the polyamide copolymer which had been determined according to the above described melting point measurement method; screw rotation speed: 300 rpm). In addition, from a side feed port, the glass fibers (b1) were supplied at a ratio of 50 parts by mass of the glass fibers (b1) based on 100 parts by mass of the polyamide copolymer (A), and thereafter, a melted kneaded product extruded from a spinning port was cooled in a strand state. The resultant was pelletized to obtain a polyamide resin composition in the form of a pellet. The water absorption rigidity, thermal rigidity, and molding appearance of the obtained polyamide resin composition were evaluated by the above described methods. The evaluation results were shown in Table 3.

<Example 15>

A polyamide resin composition was obtained by the same method as that described in Example 11 with the exception that the polyamide copolymer (a4) was used. Water absorption rigidity and thermal rigidity were evaluated by the above described methods.

<Example 16>

A polyamide resin composition was obtained by the same method as that described in Example 11 with the exception that the polyamide copolymer (a5) was used. Water absorption rigidity, thermal rigidity, and molding appearance were evaluated by the above described methods. The evaluation results were shown in Table 3.

<Example 17>

A polyamide resin composition was obtained by the same method as that described in Example 11 with the exception that the polyamide copolymer (a6) was used. Water absorption rigidity, thermal rigidity, and molding appearance were evaluated by the above described methods. The evaluation results were shown in Table 3.

<Example 18>

A polyamide resin composition was obtained by the same method as that described in Example 11 with the exception that the polyamide copolymer (a13) was used. Water absorption rigidity, thermal rigidity, and molding appearance were evaluated by the above described methods. The evaluation results were shown in Table 3.

[Table 1]

| | | Polyamide copolymer (A) constitution (mol %) | | | |
|---|---|---|---|---|---|
| | | (a) PA66 | (b) PA6I | (c) PA6C | Total of (a) + (b) + (c) |
| Example 1 | a1 | 64 | 6 | 30 | 100 |
| Example 2 | a2 | 55 | 10 | 35 | 100 |
| Example 3 | a3 | 63 | 14 | 23 | 100 |
| Example 4 | a4 | 54 | 19 | 27 | 100 |
| Example 5 | a5 | 73 | 9 | 18 | 100 |
| Example 6 | a6 | 42 | 23 | 35 | 100 |
| Example 7 | a7 | 42 | 15 | 43 | 100 |
| Example 8 | a8 | 34 | 26 | 40 | 100 |
| Comparative Example 1 | a9 | 84 | 8 | 8 | 100 |
| Comparative Example 2 | a10 | 73 | 14 | 13 | 100 |
| Comparative Example 3 | a11 | 40 | 30 | 30 | 100 |
| Comparative Example 4 | a12 | 63 | 19 | 18 | 100 |

(continued)

| | | Polyamide copolymer (A) constitution (mol %) | | | |
|---|---|---|---|---|---|
| | | (a) PA66 | (b) PA6I | (c) PA6C | Total of (a) + (b) + (c) |
| Example 9 | a13 | 63 | 14 | 23 | 100 |
| Example 10 | a14 | 54 | 19 | 27 | 100 |
| PA66: | Unit consisting of adipic acid and hexamethylenediamine | | | | |
| PA6I: | Unit consisting of isophthalic acid and hexamethylenediamine | | | | |
| PA6C: | Unit consisting of 1,4-cyclodicarboxylic acid and hexamethylenediamine | | | | |

[Table 2]

| | Polyamide copolymer (A) | Polymer properties | | | | | | | | | Appearance |
| | | Molecular weight (Mn) | Melting point (°C) | Glass transition temperature (°C) | b value | Flexural modulus (GPa) | | | | | |
| | | | | | | 23°C Dry | 23°C Wet | 100°C | Wet retention rate (%) | 100°C retention rate (%) | Gloss (%) |
|---|---|---|---|---|---|---|---|---|---|---|---|
| Example 1 | a1 | 15300 | 272 | 80 | - | 2.93 | 2.52 | 2.18 | 86.0 | 74.4 | 85 |
| Example 2 | a2 | 15300 | 273 | 84 | - | 2.94 | 2.51 | 2.04 | 85.4 | 69.4 | 88 |
| Example 3 | a3 | 15600 | 263 | 81 | 2.7 | 2.92 | 2.55 | 2.21 | 87.3 | 75.7 | 90 |
| Example 4 | a4 | 15500 | 260 | 85 | 2.8 | 2.90 | 2.51 | 2.18 | 86.6 | 75.2 | 89 |
| Example 5 | a5 | 15400 | 262 | 68 | - | 2.88 | 2.42 | 2.03 | 84.0 | 70.5 | 87 |
| Example 6 | a6 | 15600 | 261 | 90 | - | 2.90 | 2.50 | 2.19 | 86.2 | 75.5 | 86 |
| Example 7 | a7 | 14900 | 284 | 92 | - | 2.91 | 2.42 | 2.30 | 83.2 | 79.0 | 75 |
| Example 8 | a8 | 14800 | 275 | 96 | - | 2.89 | 2.41 | 2.28 | 83.4 | 78.9 | 73 |
| Comparative Example 1 | a9 | 15500 | 250 | 54 | - | 2.91 | 2.10 | 1.75 | 72.2 | 60.1 | 85 |
| Comparative Example 2 | a10 | 15500 | 257 | 55 | - | 2.88 | 2.13 | 1.81 | 74.0 | 62.8 | 88 |
| Comparative Example 3 | a11 | 13500 | 242 | 83 | - | 2.89 | 2.15 | 1.87 | 74.4 | 64.7 | 75 |
| Comparative Example 4 | a12 | 14900 | 244 | 78 | - | 2.86 | 2.22 | 1.92 | 77.6 | 67.1 | 87 |
| Example 9 | a13 | 15200 | 262 | 81 | 4.2 | 2.90 | 2.31 | 2.02 | 79.7 | 69.7 | 87 |
| Example 10 | a14 | 15100 | 260 | 84 | 4.4 | 2.88 | 2.29 | 2.00 | 79.5 | 69.4 | 85 |

[Table 3]

| | Polyamide resin composition | | | | Polymer properties | | | | | |
| | Polyamide copolymer (A) | | Inorganic filler (B) | | | | | | | |
| | | | | | Flexural modulus (GPa) | | | | | Appearance |
| | Kind | Mass part | Kind | Mass part | 23°C Dry | 23°C wet | 100°C | Wet retention rate (%) | 100°C retention rate (%) | Gloss (%) |
| Example 11 | a1 | 100 | b1 | 100 | 16.0 | 13.7 | 12.0 | 85.6 | 75.0 | 75 |
| Example 12 | a2 | 100 | b1 | 100 | 16.2 | 13.8 | 11.4 | 85.3 | 70.5 | 74 |
| Example 13 | a3 | 100 | b1 | 100 | 15.8 | 13.7 | 12.1 | 86.7 | 76.6 | 77 |
| Example 14 | a3 | 100 | b1 | 50 | 9.2 | 7.9 | 6.9 | 85.9 | 75.0 | 82 |
| Example 15 | a4 | 100 | b1 | 100 | 16.1 | 14.0 | 12.3 | 87.0 | 76.4 | 75 |
| Example 16 | a5 | 100 | b1 | 100 | 15.9 | 13.3 | 11.2 | 83.6 | 70.4 | 65 |
| Example 17 | a6 | 100 | b1 | 100 | 15.9 | 13.6 | 11.9 | 85.5 | 74.8 | 64 |
| Example 18 | a13 | 100 | b1 | 100 | 15.6 | 12.3 | 10.6 | 78.8 | 67.9 | 75 |

As shown in the tables, it was confirmed that all of the molded products obtained from the polyamide copolymers of individual examples had excellent water absorption rigidity and thermal rigidity without impairing molding appearance. On the other hand, it was confirmed that the molded products obtained from the polyamide copolymers of Comparative Examples 1 and 3 wherein the relationship between the content (mol %) of the (b) and the content (mol %) of the (c) satisfies (b) = (c), and the molded products obtained from the polyamide copolymers of Comparative Examples 2 and 4 wherein the aforementioned relationship satisfies (b) > (c), were significantly decreased in terms of water absorption rigidity and thermal rigidity at 100°C. Moreover, it was confirmed that the molded products obtained from the polyamide copolymers of Examples 3 and 4 wherein the relationship between the (b) and the (c) satisfies (c) > (b) and (c-1) > (b) $\geq$ 0.1 had water absorption rigidity and thermal rigidity that are more excellent than those of the molded products of Examples 9 and 10.

The present application is based on a Japanese patent application (Japanese Patent Application No. 2009-207233) filed with the Japan Patent Office on September 8, 2009, and a Japanese patent application (Japanese Patent Application No. 2009-207245) filed with the Japan Patent Office on September 8, 2009.

Industrial Applicability

The polyamide copolymer of the present invention can be preferably used in the fields of automobiles, electric and electronic parts, portable devices, mechanical and industrial fields, office equipment, aerospace fields, etc.

**Claims**

1.  A polyamide copolymer comprising a dicarboxylic acid component unit containing an (a) adipic acid unit, a (b) isophthalic acid unit and a (c) 1,4-cyclohexanedicarboxylic acid unit, and a diamine component unit, wherein the relationship between the content (mol %) of (b) and the content (mol) %) of (c) in a total of 100 mol % of the dicarboxylic acid component unit containing the (a), the (b) and the (c) satisfies following formula (1):

$$(c) > (b) \geq 0.1 \ (1).$$

2. The polyamide copolymer according to claim 1, wherein the content of the (a) adipic acid unit is from 40 to 80 mol %, the content of the (b) isophthalic acid unit is from 0.1 to 25 mol %, and the content of the (c) 1,4-cyclohexanedicarboxylic acid unit is from 15 to 40 mol %, based on a total of 100 mol % of the dicarboxylic acid component unit containing the (a), the (b) and the (c).

3. The polyamide copolymer according to claim 1 or 2, wherein the diamine component unit is an aliphatic diamine component unit.

4. The polyamide copolymer according to any one of claims 1 to 3, wherein the diamine component unit is a hexamethylenediamine unit.

5. The polyamide copolymer according to claim 4, which comprises
   a unit comprising the (a) adipic acid and the hexamethylenediamine,
   a unit comprising the (b) isophthalic acid and the hexamethylenediamine, and
   a unit comprising the (c) 1,4-cyclohexanedicarboxylic acid and the hexamethylenediamine.

6. A polyamide resin composition comprising
   100 parts by mass of the polyamide copolymer (A) according to any one of claims 1 to 5, and
   1 to 300 parts by mass of an inorganic filler (B).

7. A molded product comprising the polyamide copolymer according to any one of claims 1 to 5 or the polyamide resin composition according to claim 6.

8. An automobile part comprising the polyamide copolymer according to any one of claims 1 to 5 or the polyamide resin composition according to claim 6.

9. An electronic part comprising the polyamide copolymer according to any one of claims 1 to 5 or the polyamide resin composition according to claim 6.

10. A part for home appliance or OA equipment, or a part for portable device, which comprises the polyamide copolymer according to any one of claims 1 to 5 or the polyamide resin composition according to claim 6.

11. A method for producing a polyamide copolymer by copolymerizing a dicarboxylic acid component with a diamine component,
    wherein
    the method comprises a step of copolymerizing a dicarboxylic acid component containing an (a) adipic acid, a (b) isophthalic acid and a (c) 1,4-cyclohexanedicarboxylic acid with a diamine component, so as to obtain a polyamide copolymer wherein, in a total of 100 mol % of the dicarboxylic acid component unit containing a trans isomer (c-1) and a cis isomer (c-2) of the (c) 1,4-cyclodicarboxylic acid, the (a) adipic acid, and the (b) isophthalic acid, the relationship between the content (mol) %) of a unit derived from the (b) and the content (mol %) of a unit derived from the (c-1) satisfies following formula (2):

$$(c\text{-}1) > (b) \geq 0.1 \ (2).$$

12. The method for producing the polyamide copolymer according to claim 11, wherein the final endpoint temperature of copolymerization is 270°C or higher in the copolymerization of the dicarboxylic acid component containing the (a) adipic acid, the (b) isophthalic acid and the (c) 1,4-cyclohexanedicarboxylic acid with the diamine component.

13. The method for producing the polyamide copolymer according to claim 11 or 12, wherein the diamine component is an aliphatic diamine component.

14. The method for producing the polyamide copolymer according to any one of claims 11 to 13, wherein the aliphatic diamine component is hexamethylenediamine.

15. The method for producing the polyamide copolymer according to any one of claims 11 to 14, wherein the molar ratio ((c-1) / (c-2)) of the trans isomer (c-1) to the cis isomer (c-2) in the (c) 1,4-cyclodicarboxylic acid used as a raw material monomer for the copolymerization is from 50 / 50 to 10 / 90.

**Patentansprüche**

1. Polyamid-Copolymer, umfassend eine Dicarbonsäurekomponenten-Einheit, die eine (a) Adipinsäure-Einheit, eine (b) Isophthalsäure-Einheit und eine (c) 1,4-Cyclohexandicarbonsäure-Einheit enthält, und eine Diaminkomponenten-Einheit, wobei die Beziehung zwischen dem Gehalt (Mol-%) an (b) und dem Gehalt (Mol-%) an (c) in insgesamt 100 Mol-% der das (a), das (b) und das (c) enthaltenden Dicarbonsäurekomponenten-Einheit der folgenden Formel (1) entspricht:

$$(c) > (b) \geq 0{,}1 \quad (1).$$

2. Polyamid-Copolymer nach Anspruch 1, wobei der Gehalt der (a) Adipinsäure-Einheit 40 bis 80 Mol-% beträgt, der Gehalt der (b) Isophthalsäure-Einheit 0,1 bis 25 Mol-% beträgt und der Gehalt der (c) 1,4-Cyclohexandicarbonsäure-Einheit 15 bis 40 Mol-%, bezogen auf insgesamt 100 Mol-% der das (a), das (b) und das (c) enthaltenden Dicarbonsäurekomponenten-Einheit, beträgt.

3. Polyamid-Copolymer nach Anspruch 1 oder 2, wobei es sich bei der Diaminkomponenten-Einheit um eine aliphatische Diaminkomponenten-Einheit handelt.

4. Polyamid-Copolymer nach einem der Ansprüche 1 bis 3, wobei es sich bei der Diaminkomponenten-Einheit um eine Hexamethylendiamin-Einheit handelt.

5. Polyamid-Copolymer nach Anspruch 4, das
eine Einheit, die die (a) Adipinsäure und das Hexamethylendiamin umfasst,
eine Einheit, die die (b) Isophthalsäure und das Hexamethylendiamin umfasst, und
eine Einheit, die die (c) 1,4-Cyclohexandicarbonsäure und das Hexamethylendiamin umfasst,
umfasst.

6. Polyamidharzzusammensetzung, umfassend 100 Massenteile des Polyamid-Copolymers (A) nach einem der Ansprüche 1 bis 5 und
1 bis 300 Massenteile eines anorganischen Füllstoffs (B).

7. Formkörper, umfassend das Polyamid-Copolymer nach einem der Ansprüche 1 bis 5 oder die Polyamidharzzusammensetzung nach Anspruch 6.

8. Autoteil, umfassend das Polyamid-Copolymer nach einem der Ansprüche 1 bis 5 oder die Polyamidharzzusammensetzung nach Anspruch 6.

9. Elektronikteil, umfassend das Polyamid-Copolymer nach einem der Ansprüche 1 bis 5 oder die Polyamidharzzusammensetzung nach Anspruch 6.

10. Teil für Haushaltsgerät oder OA-Gerät oder Teil für tragbare Vorrichtung, das das Polyamid-Copolymer nach einem der Ansprüche 1 bis 5 oder die Polyamidharzzusammensetzung nach Anspruch 6 umfasst.

11. Verfahren zur Herstellung eines Polyamid-Copolymers durch Copolymerisation einer Dicarbonsäurekomponente mit einer Diaminkomponente, wobei das Verfahren einen Schritt der Copolymerisation einer Dicarbonsäurekomponente, die eine (a) Adipinsäure, eine (b) Isophthalsäure und eine (c) 1,4-Cyclohexandicarbonsäure enthält, mit einer Diaminkomponente zu einem Polyamid-Copolymer umfasst, wobei in insgesamt 100 Mol-% der Dicarbonsäurekomponenten-Einheit, die ein trans-isomer (c-1) und ein cis-Isomer (c-2) der (c) 1,4-Cyclodicarbonsäure, die (a) Adipinsäure und die (b) Isophthalsäure enthält, die Beziehung zwischen dem Gehalt (Mol-%) an einer von dem (b) abgeleiteten Einheit und dem Gehalt (Mol-%) an einer von dem (c-1) abgeleiteten Einheit der folgenden Formel (2) entspricht:

$$(c-1) > (b) \geq 0,1 \ (2).$$

**12.** Verfahren zur Herstellung des Polyamid-Copolymers nach Anspruch 11, bei dem die abschließende Endpunkttemperatur der Copolymerisation bei der Copolymerisation der Dicarbonsäurekomponente, die die (a) Adipinsäure, die (b) Isophthalsäure und die (c) 1,4-Cyclohexandicarbonsäure enthält, mit der Diaminkomponente 270°C oder mehr beträgt.

**13.** Verfahren zur Herstellung des Polyamid-Copolymers nach Anspruch 11 oder 12, bei dem es sich bei der Diaminkomponente um eine aliphatische Diaminkomponente handelt.

**14.** Verfahren zur Herstellung des Polyamid-Copolymers nach einem der Ansprüche 11 bis 13, bei dem es sich bei der aliphatischen Diaminkomponente um Hexamethylendiamin handelt.

**15.** Verfahren zur Herstellung des Polyamid-Copolymers nach einem der Ansprüche 11 bis 14, bei dem das Molverhältnis ((c-1)/(c-2)) von trans-Isomer (c-1) zu cis-Isomer (c-2) in der als Ausgangsmonomer für die Copolymerisation verwendeten (c) 1,4-Cyclodicarbonsäure 50/50 bis 10/90 beträgt.

**Revendications**

**1.** Copolymère de polyamide comprenant un motif de composant d'acide dicarboxylique contenant (a) un motif d'acide adipique, (b) un motif d'acide isophtalique et (c) un motif d'acide 1,4-cyclohexanedicarboxylique, et un motif de composant de diamine, dans lequel la relation entre la teneur (% en moles) de (b) et la teneur (% en moles) de (c) dans un total de 100 % en moles du motif de composant d'acide dicarboxylique contenant (a), (b) et (c) satisfait à la formule suivante (1) :

$$(c) > (b) \geq 0,1 \ (1).$$

**2.** Copolymère de polyamide selon la revendication 1, dans lequel la teneur du (a) motif d'acide adipique est de 40 à 80 % en moles, la teneur du (b) motif d'acide isophtalique est de 0,1 à 25 % en moles, et la teneur du (c) motif d'acide 1,4-cyclohexanedicarboxylique est de 15 à 40 % en moles, sur la base d'un total de 100 % en moles du motif de composant d'acide dicarboxylique contenant (a), (b) et (c).

**3.** Copolymère de polyamide selon la revendication 1 ou 2, dans lequel le motif de composant de diamine est un motif de composant de diamine aliphatique.

**4.** Copolymère de polyamide selon l'une quelconque des revendications 1 à 3, dans lequel le motif de composant de diamine est un motif d'hexaméthylènediamine.

**5.** Copolymère de polyamide selon la revendication 4, qui comprend
un motif comprenant (a) l'acide adipique et l'hexaméthylènediamine,
un motif comprenant (b) l'acide isophtalique et l'hexaméthylènediamine, et
un motif comprenant (c) l'acide 1,4-cyclohexanedicarboxylique et l'hexaméthylènediamine.

**6.** Composition de résine de polyamide comprenant 100 parties en masse du copolymère de polyamide (A) selon l'une quelconque des revendications 1 à 5, et 1 à 300 parties en masse d'une charge inorganique (B).

**7.** Produit moulé comprenant le copolymère de polyamide selon l'une quelconque des revendications 1 à 5 ou la composition de résine de polyamide selon la revendication 6.

**8.** Pièce d'automobile comprenant le copolymère de polyamide selon l'une quelconque des revendications 1 à 5 ou la composition de résine de polyamide selon la revendication 6.

9. Pièce électronique comprenant le copolymère de polyamide selon l'une quelconque des revendications 1 à 5 ou la composition de résine de polyamide selon la revendication 6.

10. Pièce pour appareil domestique ou équipement OA, ou pièce pour dispositif portable, qui comprend le copolymère de polyamide selon l'une quelconque des revendications 1 à 5 ou la composition de résine de polyamide selon la revendication 6.

11. Procédé de production d'un copolymère de polyamide par copolymérisation d'un composant d'acide dicarboxylique avec un composant de diamine, le procédé comprenant une étape de copolymérisation d'un composant d'acide dicarboxylique contenant (a) un acide adipique, (b) un acide isophtalique et (c) un acide 1,4-cyclohexanedicarboxylique avec un composant de diamine, de manière à obtenir un copolymère de polyamide dans lequel, dans un total de 100 % en moles du motif de composant d'acide dicarboxylique contenant un isomère trans (c-1) et un isomère cis (c-2) de (c) l'acide 1,4-cyclodicarboxylique, (a) l'acide adipique, et (b) l'acide isophtalique,
la relation entre la teneur (% en moles) d'un motif dérivé de (b) et la teneur (% en moles) d'un motif dérivé de (c-1) satisfait a la formule suivante (2) :

$$(c-1) > (b) \geq 0,1 \ (2).$$

12. Procédé de production du copolymère de polyamide selon la revendication 11, dans lequel la température de point final de copolymérisation est de 270 °C ou plus dans la copolymérisation du composant d'acide dicarboxylique contenant (a) l'acide adipique, (b) l'acide isophtalique et (c) l'acide 1,4-cyclohexanedicarboxylique avec le composant de diamine.

13. Procédé de production du copolymère de polyamide selon la revendication 11 ou 12, dans lequel le composant de diamine est un composant de diamine aliphatique.

14. Procédé de production du copolymère de polyamide selon l'une quelconque des revendications 11 à 13, dans lequel le composant de diamine aliphatique est l'hexaméthylènediamine.

15. Procédé de production du copolymère de polyamide selon l'une quelconque des revendications 11 à 14, dans lequel le rapport molaire ((c-1) / (c-2)) de l'isomère trans (c-1) à l'isomère cis (c-2) dans (c) l'acide 1,4-cyclodicarboxylique utilisé en tant que monomère de matière première pour la copolymérisation est de 50/50 à 10/90.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002048239 A
- WO 1997011108 A
- JP 9012868 A
- JP 6032980 A
- JP 2009207233 A
- JP 2009207245 A